# EUROPEAN PATENT APPLICATION

(11) **EP 2 489 639 A1**
(43) Date of publication of application: **22.08.2012**
(21) Application number: 10823465.9
(22) Date of filing: 15.10.2010
(51) Int. Cl.: C02F 1/44, B01D 61/02, B41M 5/00, C02F 1/00, C02F 1/28, C02F 1/42, C02F 3/34, C02F 9/00

(54) **WASTE WATER CLEANING SYSTEM, WASHING DEVICE, AND INK JET PRINTER SYSTEM**

(30) Priority: 16.10.2009 JP 2009239743
(71) Applicant: Mimaki Engineering Co., Ltd., Tomi-shi, Nagano 389-0512 (JP)
(72) Inventor: TABAYASHI, Isao, Tomi-shi Nagano 389-0512 (JP)
(74) Representative: Uchida, Kenji
(86) International application number: PCT/JP2010/068147
(87) International publication number: WO 2011/046197

(57) **Abstract**

Problem

To reduce the frequency of the removal of residue and suppress a reduction in the filtering efficiency of an RO membrane and damage to the RO membrane.

Means for Resolution

A wastewater purifying system includes: a wastewater tank 21 which stores wastewater discharged from a washing device 13 which washes a textile T subjected to printing by using an inkjet printer 11; an enzyme/microorganism feeding device 26 which feeds an enzyme and a microorganism which degrade a dye into the wastewater tank 21; a pH adjusting agent feeding device 27 which feeds a pH adjusting agent into the wastewater tank 21; a stirring device 28 which stirs the wastewater in the wastewater tank 21; a heat insulating device 29 which keeps the wastewater tank 21 warm; a filtering device 22 which filters the wastewater by cross-flow filtering using an RO membrane; a pump 23 which pumps the wastewater to the filtering device 22 from the wastewater tank 21; an ion removing device 24 which removes ions by bringing the filtered water into contact with an ion exchange resin; and a decoloring device 25 which decolors the filtered water by bringing the filtered water into contact with activated carbon.

## Description

### Technical Field

The present invention relates to a wastewater purifying system which purifies wastewater containing ink, a washing device, and an inkjet printer system provided with the wastewater purifying system.

### Background Art

Generally, printing on textiles such as fabric or cloth using an inkjet printer is well-known. In such printing, wastewater containing ink is discharged because the textile is washed with water as a post-process of the printing. Accordingly, hitherto, a wastewater purifying system using a wastewater tank and an RO membrane (reverse osmosis membrane) has been used in order to purify the wastewater (for example, see PTL 1).

The conventional wastewater purifying system stores wastewater generated by washing a textile subjected to dyeing and printing in a wastewater tank, and recovers filtered water filtered by passing the wastewater stored in the wastewater tank through an RO membrane.

### Related Art List

### Patent Literature

[PTL 1] JP-A-2006-130367

### Disclosure of the Invention

### Problems to be Solved by the Invention

In the conventional wastewater purifying system, as wastewater is purified, the wastewater which is not recovered from the RO membrane gradually becomes concentrated. Therefore, after a predetermined amount of wastewater purification, in order to maintain the performance of the RO membrane for long periods, it is necessary to remove the residue generated due to the concentration of wastewater. In addition, as the wastewater becomes concentrated, material adhering to the RO membrane increases, and there is a problem in that a reduction in the filtering efficiency of the RO membrane, damage to the RO membrane, or the like may occur.

Accordingly, an object of the invention is to provide a wastewater purifying system which can reduce the frequency of the removal of residue and suppress a reduction in the filtering efficiency of an RO membrane and damage to the RO membrane, a washing device, and an inkjet printer system provided with the wastewater purifying system.

### Means for Solving the Problems

A wastewater purifying system according to the invention includes: a wastewater tank which stores wastewater containing an ink; a filtering device which obtains filtered water by filtering a part of the wastewater passing by cross-flow filtering using an RO membrane; a liquid transmitting means for circulating the wastewater between the wastewater tank and the filtering device; and means for incorporating at least one of an enzyme and a microorganism which degrade a colorant, and preferably a water-soluble or water-dispersible dye in the wastewater circulated by the liquid transmitting means.

According to the wastewater purifying system of the invention, wastewater is circulated between the wastewater tank and the filtering device by the liquid transmitting means, and when passing through the filtering device, a part of the waste liquid is filtered by the RO membrane and the filtered water is recovered. At this time, the wastewater is concentrated by the residue removed by the RO membrane, but since the enzyme and microorganism contained in the wastewater degrade a colorant, and preferably a water-soluble or water-dispersible dye contained in the wastewater, the concentration of the wastewater can be suppressed. Accordingly, even when the frequency of the removal of the residue is reduced, a reduction in the filtering efficiency of the RO membrane can be suppressed. Moreover, when the waste liquid passes through the filtering device, the enzyme and microorganism contained in the waste liquid degrade a colorant, and preferably a water-soluble or water-dispersible dye, adhering to the RO membrane, and thus material adhering to the RO membrane is reduced. Accordingly, a reduction in the filtering efficiency of the RO membrane can be suppressed and the life-span of the RO membrane can be lengthened.

In addition, a decoloring means for decoloring the filtered water obtained by the filtering device by bringing the filtered water into contact with activated carbon is preferably further provided. In this manner, by providing the decoloring means and by decoloring the filtered water by bringing the filtered water into contact with activated carbon, the color regulation in the effluent treatment standard can be cleared.

In addition, an ion removing means for removing ions by bringing the filtered water obtained by the filtering device into contact with an ion-exchange resin is preferably further provided. In this manner, by providing the ion removing means and by removing ions by bringing the filtered water into contact with the ion exchange resin, the filtered water can be changed into pure water. Accordingly, the range of use of the filtered water can be expanded. For example, the filtered water can be reused as washing water in the printing system.

In addition, a stirring means for stirring the wastewater stored in the wastewater tank is preferably further provided. In this manner, by providing the stirring means and by stirring the wastewater stored in the wastewater tank, degradation of a colorant, and preferably a water-soluble or water-dispersible dye can be promoted and the enzyme and microorganism in the waste liquid are uniformly distributed, whereby unevenness in degradation of the colorant, and preferably the water-soluble or water-dispersible dye can be suppressed.

In addition, a heat insulating means for maintaining the temperature of the wastewater in a predetermined temperature range is preferably further provided. In this manner, by providing the heat insulating means and by maintaining the temperature of the wastewater in a predetermined temperature range, the reaction of the enzyme and microorganism can be activated, and thus degradation of a colorant, and preferably a water-soluble or water-dispersible dye can be further promoted.

In addition, a pH adjusting means for maintaining the pH of the wastewater in a predetermined pH range is preferably further provided. In this manner, by providing the pH adjusting means and by maintaining the pH of the wastewater in a predetermined pH range, the filtering efficiency of the RO membrane can be improved and the life-span of the RO membrane can be lengthened.

In addition, the above-described enzyme is preferably at least one of cellulase, laccase, peroxidase, manganese peroxidase, allyl alcohol oxidase, and azo-reductase, and the above-described microorganism is preferably at least one of filamentous fungi such as mushrooms and Bacillus group bacteria. By incorporating one or more materials selected from the enzyme groups and the microorganism groups in the wastewater, a colorant, and preferably a water-soluble or water-dispersible dye can be effectively degraded.

A washing device according to the invention includes: a washing means for washing a recording medium subjected to printing using ink with washing water; and the wastewater purifying system according to any one of the above-described aspects. Wastewater generated by the washing means is filtered by the wastewater purifying system, and the filtered water filtered by the wastewater purifying system is used as the washing water which is used in the washing means.

According to the washing device of the invention, the wastewater generated by washing a recording medium is circulated between the wastewater tank and the filtering device by the liquid transmitting means in the wastewater purifying system, and thus when passing through the filtering device, a part of the waste liquid is filtered by the RO membrane and becomes washing water which is used in the washing means. Accordingly, the wastewater can be reused and washing water usage can be reduced.

In the filtering device, the wastewater is concentrated by the residue removed by the RO membrane. However, since the enzyme and microorganism contained in the wastewater degrade the colorant, and preferably the water-soluble or water-dispersible dye contained in the wastewater, the concentration of the wastewater can be suppressed. Accordingly, even when the frequency of the removal of residue is reduced, a reduction in the filtering efficiency of the RO membrane can be suppressed. Moreover, when the waste liquid passes through the filtering device, the enzyme and microorganism contained in the waste liquid degrade the colorant, and preferably the water-soluble or water-dispersible dye adhering to the RO membrane, and thus material adhering to the RO membrane is reduced. Accordingly, a reduction in the filtering efficiency of the RO membrane can be suppressed and the life-span of the RO membrane can be lengthened.

An inkjet printer system according to the invention includes: an inkjet printer which ejects an ink toward a recording medium; a coloring machine which develops the color of the ink ejected to the recording medium by the inkjet printer; a washing means for washing the recording medium with washing water; and the wastewater purifying system according to any one of Claims 1 to 7. Wastewater generated by the washing means is filtered by the wastewater purifying system, and the filtered water filtered by the wastewater purifying system is used as the washing water which is used in the washing means.

According to the inkjet printer system of the invention, an image is printed on a recording medium by ejecting an ink from the inkjet printer, the color of the ink on the recording medium is developed by the coloring machine, and the recording medium is washed by the washing means, and thus an image with well-developed color can be printed on the recording medium without ink stains. The wastewater generated by washing the recording medium is circulated between the wastewater tank and the filtering device by the liquid transmitting means in the wastewater purifying system, and thus when passing through the filtering device, a part of the waste liquid is filtered by the RO membrane and becomes washing water which is used in the washing means. Accordingly, the wastewater can be reused and washing water usage can be reduced, whereby printing using the inkjet printer can be performed even in a small space such as an office. In the filtering device, the wastewater is concentrated by the residue removed by the RO membrane. However, since the enzyme and microorganism contained in the wastewater degrade the colorant, and preferably the water-soluble or water-dispersible dye contained in the wastewater, the concentration of the wastewater can be suppressed. Accordingly, even when the frequency of the removal of residue is reduced, a reduction in the filtering efficiency of the RO membrane can be suppressed. Moreover, when the waste liquid passes through the filtering device, the enzyme and microorganism contained in the waste liquid degrade the colorant, and preferably the water-soluble or water-dispersible dye adhering to the RO membrane, and thus material adhering to the RO membrane is reduced. Accordingly, a reduction in the filtering efficiency of the RO membrane can be suppressed and the life-span of the RO membrane can be lengthened.

In this case, the ink which is ejected by the inkjet printer is preferably an aqueous ink, in which the colorant is a water-soluble or water-dispersible dye, containing an aqueous dye selected from an acid dye, a direct dye and a reactive dye. In this manner, printing can be preferably performed on a recording medium by ejecting an aqueous ink containing an aqueous dye to the recording medium from the inkjet printer.

### Advantage of the Invention

According to the invention, it is possible to reduce the frequency of the removal of residue and to suppress a reduction in the filtering efficiency of an RO membrane and damage to the RO membrane.

### Brief Description of the Drawings

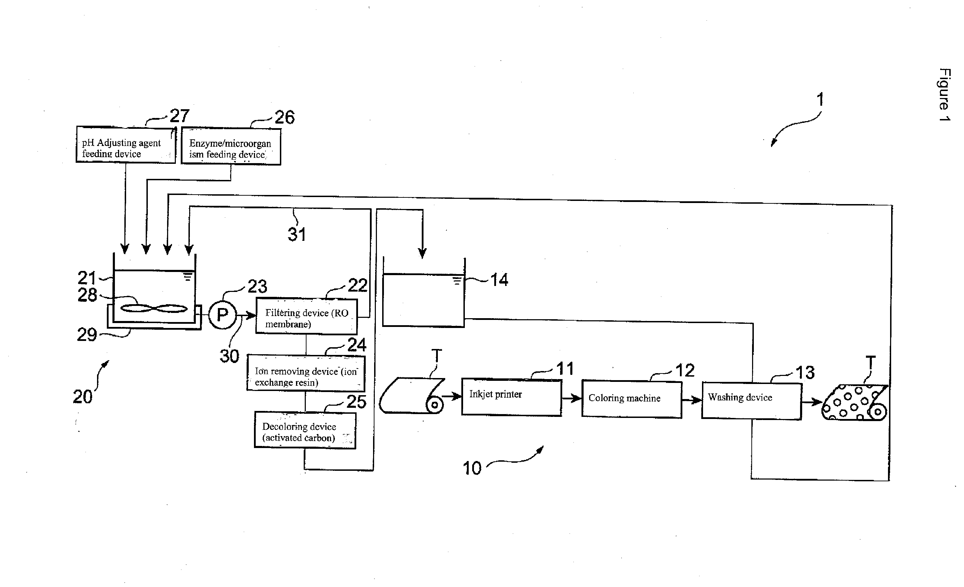

[Fig. 1] Fig. 1 is a diagram showing the schematic configuration of an inkjet printer system according to an embodiment.

### Best Mode for Carrying Out the Invention

Hereinafter, preferred embodiments of a wastewater purifying system, a washing device, and an inkjet printer system provided with the wastewater purifying system according to the invention will be described in detail with reference to the drawings. This embodiment relates to an inkjet printer system, to which the invention is applied, performing printing on a textile using an inkjet printer.

Fig. 1 is a diagram showing the schematic configuration of an inkjet printer system according to the embodiment. As shown in Fig. 1, an inkjet printer system 1 according to this embodiment includes a printing system 10 which performs printing on a textile T such as fabric or cloth and a wastewater purifying system 20 which purifies wastewater discharged by washing of the textile T in the printing system 10.

The printing system 10 includes an inkjet printer 11, a coloring machine 12, a washing device 13, and a washing water tank 14 to perform printing on a textile T.

The inkjet printer 11 prints a predetermined image on a textile T by ejecting an ink. Therefore, the ink which is ejected from the inkjet printer 11 is an aqueous ink containing an aqueous dye selected from an acid dye, a direct dye and a reactive dye, and the main composition of the ink includes a dye, a water-soluble solvent, a preservative, an alkaline agent, and water. As the dye, a dye having a water-soluble or water-dispersible colorant is used.

The coloring machine 12 fixes an ink to a textile T and develops the color of the ink well by humidifying the textile T subjected to printing by the inkjet printer 11. Examples of the coloring machine 12 include a heating and humidifying device which heats and humidifies a textile T by spraying high-temperature steam using a high-temperature steamer or the like, a heating and humidifying device which heats a textile T by spraying room-temperature steam using a room-temperature steamer or the like and by bringing the steam into contact with a high-temperature heating roll, a room-temperature humidifying device which humidifies a textile T by spraying room-temperature steam by a room-temperature steamer or the like.

The washing device 13 washes off the ink, sizing agent and the like, which have not been fixed to a textile T even following heating by the coloring machine 12, with washing water. The textile T washed by the washing device 13 is subjected to a post-processing drying process and becomes a finished printed product. Meanwhile, the washing water used in the washing of the washing device 13 becomes wastewater containing the ink removed from the textile T, and is purified in the wastewater purifying system 20 to be described later.

The washing water tank 14 is a tank storing washing water which is used to wash a textile T in the washing device 13.

The wastewater purifying system 20 includes a wastewater tank 21, a filtering device 22, a pump 23, an ion removing device 24, and a decoloring device 25 to purify the wastewater discharged from the washing device 13.

The wastewater tank 21 is a tank which stores the wastewater discharged from the washing device 13. The wastewater tank 21 is provided with an enzyme/microorganism feeding device 26 which feeds an enzyme or microorganism into the wastewater tank 21, a pH adjusting agent feeding device 27 which feeds a pH adjusting agent into the wastewater tank 21, a stirring device 28 which stirs the wastewater stored in the wastewater tank 21, and a heat insulating device 29 which maintains the temperature of the wastewater stored in the wastewater tank 21 in a predetermined temperature range.

The enzyme/microorganism feeding device 26 feeds a predetermined enzyme or microorganism into the wastewater tank 21 to degrade a dye (colorant) of the ink stored in the wastewater tank 21. Therefore, from the enzyme/microorganism feeding device 26, an enzyme and a microorganism having a property to degrade the dye of the ink are fed into the wastewater tank 21.

Examples of a microorganism group which is fed into the wastewater tank 21 by the enzyme/microorganism feeding device 26 include filamentous fungi such as mushrooms, Bacillus group bacteria that live on a filamentous fungi medium, and the like. The Bacillus group bacteria degrade protein and starch and produce digestive breakdown enzymes such as amylases and proteases, and further degrade hydrogen sulfide, ammonia, amines, and the like.

Examples of an enzyme group which is fed into the wastewater tank 21 by the enzyme/microorganism feeding device 26 include a glycoside hydrolase, a glycoside oxidoreductase, a lignin-degrading enzyme, and the like, and specific examples thereof include cellulase, laccase, peroxidase, manganese peroxidase, allyl alcohol oxidase, azo-reductase, and the like. The enzyme groups are enzymes extracted from filamentous fungi, Bacillus group bacteria and the like, and actually, these are used after being extracted from Agaricus bisporus, Armillariella mellea, Trametes versicolor, Flammulina velutipes (cultivated species), Flammulina velutipes (wild species), Grifola frondosa, Ischnoderma resinosum, Omphalotus guepiniformis, Lentinula edodes, Lentinus sp., Hypsizigus marmoreus, Mycoleptodonoides aitchisonii, Hypholoma sublateritium, Sarcomixa serotina, Pholiota aurivella, Pholiota malicola, Pholiota nameko, Phyllotopsis nidulans, Pleurotus eryngii, Pleurotus ostreatus, Pleurotus salmoneostramineus. However, the method of extracting the enzyme groups is not particularly limited.

Here, the mechanism by which the dye is degraded by the enzyme/microorganism will be described briefly. For example, mushrooms contain three kinds of lignin-degrading enzymes, that is, lignin peroxidase, manganese peroxidase, and laccase. These lignin-degrading enzymes have a wide substrate specificity, degrade lignin with a radical reaction, and cause a degradation reaction via a mediator. The dye is degraded due to the characteristics of the lignin-degrading enzymes. In particular, the lignin-degrading enzymes decolor the pigment of the dye.

In addition, the enzyme/microorganism feeding device 26 feeds one or more materials selected from the enzyme groups and microorganism groups into the wastewater tank 21. The enzyme/microorganism feeding device 26 may feed only an enzyme into the wastewater tank 21, may feed only a microorganism into the wastewater tank 21, or may feed both an enzyme and a microorganism into the wastewater tank 21.

The pH adjusting agent feeding device 27 feeds a predetermined pH adjusting agent into the wastewater tank 21 to maintain the pH of the wastewater in a range between acidity and neutrality (preferably, in a range between pH 3 to 7). It is possible to cause high enzyme activity by adjusting the pH of the wastewater to a range between acidity and neutrality.

The stirring device 28 includes a stirring blade which is disposed inside the wastewater tank 21, and a driving source (not shown) such as a motor which is disposed outside the wastewater tank 21 to rotate the stirring blade. The stirring device 28 obtains a rotation driving force from the driving source and rotates the stirring blade in the wastewater tank 21 to stir the wastewater stored in the wastewater tank 21.

The heat insulating device 29 heats or cools the wastewater tank 21 to maintain the temperature of the wastewater in an optimum temperature range appropriate for each enzyme. By adjusting the temperature of the wastewater to the optimum temperature range appropriate for each enzyme, the reaction of the enzyme/microorganism contained in the wastewater is activated and degradation of the ink in the wastewater is promoted. Since the normal heatproof temperature of an RO membrane of the filtering device 22 to be described later is about 40°C, the temperature of the wastewater is preferably maintained to be equal to or lower than the heatproof temperature of the RO membrane by the heat insulating device 29.

The filtering device 22 filters a part of the wastewater by cross-flow filtering using an RO membrane (reverse osmosis membrane). The RO membrane filters contaminants contained in the wastewater using a reverse osmosis membrane, and mainly filters contaminants such as a dye contained in the wastewater.

The filtering device 22 is configured so that the wastewater flows parallel to the membrane surface of the RO membrane. A supply passage 30 through which the wastewater is supplied to one end portion of the RO membrane from the wastewater tank 21 and a returning passage 31 through which the wastewater discharged from the other end portion of the RO membrane returns to the wastewater tank 21 are connected to the filtering device 22. When the wastewater stored in the wastewater tank 21 is supplied to one end portion of the RO membrane in the filtering device 22 through the supply passage 30 and the wastewater passing through the RO membrane returns to the wastewater tank 21 through the returning passage 31 from the other end portion of the RO membrane, the wastewater can be circulated between the wastewater tank 21 and the filtering device 22.

In addition, the filtering device 22 filters the wastewater transmitted from the wastewater tank 21 using the RO membrane and recovers the filtered water. Meanwhile, the residue containing the contaminants removed by the RO membrane is taken into the wastewater passing through the filtering device 22, and the concentrated waste liquid is discharged from the filtering device 22.

The pump 23 is attached to the supply passage 30 connecting the wastewater tank 21 to one end portion of the RO membrane, and pumps the wastewater of the supply passage 30 from the wastewater tank 21 to the filtering device 22. When the pump pumps the wastewater from the supply passage 30, the wastewater stored in the wastewater tank 21 is transmitted to the RO membrane of the filtering device 22, and the concentrated wastewater filtered by the RO membrane is transmitted to the wastewater tank 21 from the filtering device 22.

The ion removing device 24 removes ions from the filtered water recovered by the filtering device 22 to purify the filtered water. For example, the ion removing device 24 brings the filtered water into contact with an ion exchange resin to which a current is applied, and thus removes ions from the filtered water, thereby being able to change the filtered water into pure water.

The decoloring device 25 decolors the filtered water from which the ions have been removed by the ion removing device 24. For example, the decoloring device 25 brings the filtered water into contact with a bed of activated carbon to adsorb the coloring components contained in the filtered water by the activated carbon, thereby being able to decolor the filtered water. The filtered water decolored by the decoloring device 25 is transmitted to the washing water tank 14 and is reused as washing liquid of the washing device 13.

In this embodiment, a description has been provided in which first, the filtered water recovered by the filtering device 22 is subjected to ion removal by the ion removing device 24, and then decolored by the decoloring device 25. However, first, the filtered water recovered by the filtering device 22 may be decolored by the decoloring device 25, and then may be subjected to ion removal by the ion removing device 24.

Next, the processing operation of the inkjet printer system 1 according to this embodiment will be described.

First, in the printing system 10, ink droplets are ejected to a textile T by the inkjet printer 11 to print a predetermined image on the textile T.

Next, the coloring machine 12 applies steam to the textile T subjected to printing to perform humidification. Accordingly, the ink adhered to the textile T is fixed, and the color thereof is developed well.

Next, the washing device 13 washes the heated textile T with the washing water stored in the washing water tank 14. Accordingly, the ink, sizing agent and the like, which have not been fixed even by the coloring machine 12, are removed from the textile T. At this time, the washing device 13 discharges the wastewater in which the ink is contained due to the washing of the textile T, and this wastewater is stored in the wastewater tank 21.

In the wastewater purifying system 20, in order to purify the wastewater stored in the wastewater tank 21, first, the enzyme/microorganism feeding device 26 feeds one or more enzymes and/or microorganisms selected from the above-described enzyme groups and microorganism groups into the wastewater tank 21. In addition, the pH adjusting agent feeding device 27 feeds a predetermined pH adjusting agent into the wastewater tank 21, the heat insulating device 29 maintains the temperature of the wastewater in the wastewater tank 21 in a predetermined temperature range, and the stirring device 28 stirs the wastewater in the wastewater tank 21.

Accordingly, in the wastewater tank 21, the wastewater, enzyme and microorganism are uniformly mixed in a state in which the wastewater contains the enzyme and microorganism. In addition, the pH of the wastewater is maintained in a predetermined range, and the temperature of the wastewater is maintained in a predetermined range. The dye which is contained in the wastewater is gradually degraded by the enzyme/microorganism contained in the wastewater.

The wastewater which contains the enzyme and microorganism in this manner is pumped from the wastewater tank 21 to the filtering device 22 through the supply passage 30 by the pump 23 attached to the supply passage 30.

In the filtering device 22, the wastewater passes through the RO membrane, and thus a part of the wastewater is filtered. The filtered water from which contaminants have been removed is recovered, and the wastewater passing through the RO membrane is concentrated by the residue. The concentrated wastewater is discharged from the filtering device 22 and returns to the wastewater tank 21 through the returning passage 31.

When the wastewater is circulated in this manner between the wastewater tank 21 and the filtering device 22, the dye is gradually degraded by the enzyme and microorganism contained in the wastewater, and the wastewater is diluted. Furthermore, the dye adhering to the RO membrane is also gradually degraded by the enzyme/microorganism contained in the wastewater, and material adhering to the RO membrane is reduced.

The filtered water filtered by the filtering device 22 is transmitted to the ion removing device 24. In the ion removing device 24, the filtered water is brought into contact with the ion exchange resin to which a current is applied, and thus ions are removed from the filtered water and the filtered water becomes pure water. The filtered water from which the ions have been removed is transmitted to the decoloring device 25.

In the decoloring device 25, the filtered water from which the ions have been removed is brought into contact with activated carbon, whereby the coloring component which has not been removed by the filtering device 22 is adsorbed by the activated carbon and the filtered water is thus decolored. The decolored filtered water is transmitted to the washing water tank 14 and becomes washing water for washing the textile T in the washing device 13.

According to the inkjet printer system 1 of this embodiment, an image is printed on a textile T by ejecting an ink from the inkjet printer 11, the color of the ink on the textile T is developed by the coloring machine 12, and the textile T is washed in the washing device 13, and thus an image with well-developed color can be printed on the textile T without ink stains. The wastewater generated by washing the textile T is circulated between the wastewater tank 21 and the filtering device 22 by the pump 23 in the wastewater purifying system 20, and thus when passing through the filtering device 22, a part of the waste liquid is filtered by the RO membrane and becomes washing water which is used in the washing device 13. Accordingly, the wastewater can be reused and washing water usage can be reduced, whereby printing using the inkjet printer can be performed even in a small space such as an office.

In the filtering device 22, the wastewater is concentrated by the residue removed by the RO membrane. However, since the enzyme and microorganism contained in the wastewater degrade the dye contained in the wastewater, concentration of the wastewater can be suppressed. Accordingly, even when the frequency of the removal of residue is reduced, a reduction in the filtering efficiency of the RO membrane can be suppressed. Moreover, when the waste liquid passes through the filtering device 22, the enzyme and microorganism contained in the waste liquid degrade the dye adhering to the RO membrane, and thus material adhering to the RO membrane is reduced. Accordingly, a reduction in the filtering efficiency of the RO membrane can be suppressed and the life-span of the RO membrane can be lengthened.

In addition, the image can be preferably printed on the textile T by ejecting an aqueous ink containing an aqueous dye to the textile T from the inkjet printer 11.

In addition, by providing the decoloring device 25 in the wastewater purifying system 20 and by decoloring the filtered water by bringing the filtered water into contact with activated carbon, the color regulation in the effluent treatment standard can be cleared.

In addition, by providing the ion removing device 24 in the wastewater purifying system 20 and by removing ions by bringing the filtered water into contact with an ion exchange resin, the filtered water can be changed into pure water. Accordingly, the range of use of the filtered water can be expanded. For example, the filtered water can be reused as washing water in the printing system.

In addition, by providing the stirring device 28 in the wastewater purifying system 20 and by stirring the wastewater stored in the wastewater tank 21, dye degradation can be promoted and the enzyme and microorganism in the waste liquid are uniformly distributed, whereby unevenness in degradation of the dye can be suppressed.

In addition, by providing the heat insulating device 29 in the wastewater purifying system 20 and by maintaining the temperature of the wastewater in a predetermined temperature range, the reaction of the enzyme and microorganism can be activated, and thus degradation of the dye can be further promoted.

In addition, by providing the pH adjusting agent feeding device 27 in the wastewater purifying system 20 and by maintaining the pH of the wastewater in a predetermined pH range, the filtering efficiency of the RO membrane in the filtering device 22 can be improved and the life-span of the RO membrane can be lengthened.

In addition, the dye contained in the wastewater can be effectively degraded by using one or more materials selected from the above-described enzyme group and microorganism group as the enzyme and microorganism which are fed into the wastewater tank 21 from the enzyme/microorganism feeding device 26.

The preferred embodiments of the invention have been described above, but the invention is not limited to these embodiments. For example, in the above embodiments, examples of the enzyme groups and the microorganism groups which are fed into the wastewater tank 21 from the enzyme/microorganism feeding device 26 are provided. However, any enzymes and microorganisms may be used as long as they can degrade a colorant, and preferably a water-soluble or water-dispersible dye.

### Description of Reference Numerals and Signs

- 11:: inkjet printer
- 13:: washing device
- 21:: wastewater tank
- 22:: filtering device
- 23:: pump
- 24:: ion removing device
- 25:: decoloring device
- 26:: enzyme/microorganism feeding device
- 27:: pH adjusting agent feeding device
- 28:: stirring device
- 29:: heat insulating device

## Claims

1. A wastewater purifying system comprising:
a wastewater tank which stores wastewater containing an ink;
a filtering device which obtains filtered water by filtering a part of the wastewater passing by cross-flow filtering using an RO membrane;
a liquid transmitting means for circulating the wastewater between the wastewater tank and the filtering device; and
means for incorporating at least one of an enzyme and a microorganism which degrade a colorant, and preferably a water-soluble or water-dispersible dye in the wastewater circulated by the liquid transmitting means.

2. The wastewater purifying system according to Claim 1, further comprising:
a decoloring means for decoloring the filtered water obtained by the filtering device by bringing the filtered water into contact with activated carbon.

3. The wastewater purifying system according to Claim 1, further comprising:
an ion removing means for removing ions by bringing the filtered water obtained by the filtering device into contact with an ion-exchange resin.

4. The wastewater purifying system according to Claim 1, further comprising:
a stirring means for stirring the wastewater stored in the wastewater tank.

5. The wastewater purifying system according to Claim 1, further comprising:
a heat insulating means for maintaining the temperature of the wastewater in a predetermined temperature range.

6. The wastewater purifying system according to Claim 1, further comprising:
a pH adjusting means for maintaining the pH of the wastewater in a predetermined pH range.

7. The wastewater purifying system according to Claim 1, wherein the enzyme is at least one of cellulase, laccase, peroxidase, manganese peroxidase, allyl alcohol oxidase, and azo-reductase, and
the microorganism is at least one of filamentous fungi such as mushrooms and Bacillus group bacteria.

8. A washing device comprising:
a washing means for washing a recording medium subjected to printing using ink with washing water; and
the wastewater purifying system according to any one of Claims 1 to 7,
wherein wastewater generated by the washing means is filtered by the wastewater purifying system, and the filtered water filtered by the wastewater purifying system is used as the washing water which is used in the washing means.

9. An inkjet printer system comprising:
an inkjet printer which ejects an ink toward a recording medium;
a coloring machine which develops the color of the ink ejected to the recording medium by the inkjet printer;
a washing means for washing the recording medium with washing water; and
the wastewater purifying system according to any one of Claims 1 to 7,
wherein wastewater generated by the washing means is filtered by the wastewater purifying system, and the filtered water filtered by the wastewater purifying system is used as the washing water which is used in the washing means.

10. The inkjet printer system according to Claim 9,
wherein the ink which is ejected from the inkjet printer is an aqueous ink containing an aqueous dye selected from an acid dye, a direct dye and a reactive dye.
